# EUROPÄISCHE PATENTANMELDUNG

(11) **EP 3 450 516 A1**
(43) Veröffentlichungstag der Anmeldung: **06.03.2019**
(21) Anmeldenummer: 17189142.7
(22) Anmeldetag: 04.09.2017
(51) Int. Cl.: C09D 183/16

(54) **ZUSAMMENSETZUNG ZUR VEREDELUNG EINES SUBSTRATS, INSBESONDERE VON GLAS**

(71) Anmelder: EBC-Consulting AG, 6062 Wien (CH); Microdiamant AG, 8574 Lengwil (CH)
(72) Erfinder: Eberhart, Peter, 6062 Wilen (CH); Jentgens, Christian, 8360 Wallenwil (CH)
(74) Vertreter: Hepp Wenger Ryffel AG

(57) **Zusammenfassung**

Die Erfindung betrifft eine Zusammensetzung zur Veredelung eines Substrats, insbesondere Glas, enthaltend eine Bindematrix aus Silazan und oder Siloxan, bevorzugt Cyclo-Silazan oder Cyclo-Siloxan, und ein Vernetzungsmittel, wobei das Vernetzungsmittel bevorzugt ein Alkoxy-Silan oder ein Alkylamine-Silan ist. Die Zusammensetzung enthält weiter Hartpartikel, welche eine Vickers-Härte von mehr als 1200 HV1 aufweisen. Die Matrix einschliesslich Hartpartikel dringen in die Oberfläche des Substrats ein, wodurch sich die Härte und mechanische Belastbarkeit der Oberfläche verbessert. Die Veredelung eignet sich besonders gut für den Schutz von Mobiltelefondisplays, Displays von anderen Mobilgeräten und elektronischen Geräten.

## Beschreibung

Die Erfindung bezieht sich auf eine Zusammensetzung zur Veredelung eines Substrats. Die Zusammensetzung wird auf das Substrat, insbesondere auf Glas, aufgetragen und verbessert dessen mechanischen Eigenschaften wie Härte, Kratzfestigkeit und Bruchsicherheit. Die Zusammensetzung enthält eine Bindematrix aus Silazanen oder Siloxanen, und ein Vernetzungsmittel, sowie Hartpartikel.

In der Regel werden die Displays von elektronischen Geräten mit Glas geschützt. Insbesondere bei tragbaren elektronischen Geräten wird diese Glas-Schicht häufig hohen Belastungen im Alltag ausgesetzt. Die Hersteller solcher Gläser haben daher versucht, die Kratzfestigkeit und Bruchsicherheit der Oberfläche solcher Gläser zu verbessern. Bekannte Beispiele sind Gorilla Glass von Corning Inc., Dragontail von Asahi Glass Co. oder Xensation von Schott North America. Während die behandelten Gläser häufig gute Kratzfestigkeit aufweisen, bleibt die Bruchfestigkeit eine Herausforderung.

Um die Gläser zusätzlich zu schützen, wurden daher Schutzhüllen für Screens (US2017172268), anhaftende Folien (US2017145267) und Glasbeschichtungen (WO2017131433) vorgeschlagen. Oft werden mehrere Schichten mit unterschiedlichen optischen Eigenschaften, elektrischer Leifähigkeit, Haftverhalten, Widerstandsfähigkeit und Härte benötigt, um gute Resultate zu erzielen (US9471172).

Während die Schutzhüllen für effizienten Schutz auf das jeweilige Display resp. das elektronische Gerät angepasst werden müssen und dessen Grösse und Gewicht merklich erhöhen, fehlt es bei folienbasierten Lösungen häufig an vollständiger Benetzung des Substrats mit Klebstoff, sodass sich Hohlräume zwischen Film und Oberfläche bilden können. Auch der schwer zu vermeidende Einschluss von Luftblasen unterhalb der Folie ist ein Problem. Mehrfach-Beschichtungen sind aufwändig und häufig nur im industriellen Massstab bereitstellbar (US2001/0028956 oder US2016/0085370).

Es ist deshalb eine Aufgabe der vorliegenden Erfindung, die Nachteile des Stands der Technik zu überwinden, insbesondere die Härte und Bruchsicherheit von Substraten, vorzugsweise von Glas, sowie die Handhabbarkeit zu verbessern.

Die Erfindung erfüllt den oben genannten Zweck, indem u.a. Hartpartikel, insbesondere Diamant-Partikel, in die Oberfläche des Substrats eingebracht werden. Die Partikel verbinden sich mit dem Substrat via einer Bindematrix aus Siloxan und/oder Silazan einerseits und einem Vernetzungsmittel andererseits. Silazane (besonders Cyclo-Silazane) sind im Rahmen der Erfindung gegenüber Siloxanen und Cyclosiloxanen bevorzugt und können auch gänzlich ohne Siloxane bzw. Cyclosiloxane im Rahmen der Erfindung verwendet werden. Das Vernetzungsmittel besteht bevorzugt aus Alkoxy-Silanen und / oder Alkylamin-Silanen und bildet in der Gegenwart von Wasser Quervernetzungen zwischen den Siloxanen und/oder Silazanen sowie mit der Substratoberfläche und Hartpartikeloberflächen.

Die Zusammensetzung beschwert das Material nicht wesentlich und beeinträchtigt die optischen und elektrischen Eigenschaften des Materials nicht. Es kann auf einer Vielzahl von Geräten und Formen (auch nicht-planaren Oberflächen) angewendet werden. Die Anwendung kann durch einen Laien in wenigen Arbeitsschritten und kurzer Zeit ausgeführt werden. Die durchgehende Vernetzung der Zusammensetzung mit dem Substrat kann mit geeignet gewählter Fluidität der Zusammensetzung erreicht werden. Die aufgetragene Schicht kann unter Standardbedingungen, insbesondere Raumtemperatur, Luftfeuchtigkeit, Umgebungsluft, natürliches Licht, ausgehärtet werden.

Silikonhaltige Polymere und insbesondere Silazane und Siloxane sind im Stand der Technik bekannt und wurden bereits vielfältig zur Beschichtung von Oberflächen verwendet. Bekannte Eigenschaften von Silazanen / Siloxanen sind beispielsweise Hitzebeständigkeit und Transparenz (US7371433), anti-reflektierende Eigenschaften (US2010092895), Widerstandsfähigkeit gegen Risse und Cracking (US2017210944), hoher Brechungsindex (US2017210944), Eignung als Korrosionsschutz (WO 2007/096070), Eignung für Gas-Barriere Beschichtungen (WO 2007/012392) und Anti-Fingerprint Beschichtungen (EP 1856221).

Die vorliegende Erfindung verbindet die Erkenntnisse aus der Siloxan/Silazan-Beschichtungstechnik mit der herausragenden Stabilität von diamantartigen Kohlestoff-Verbindungen und anderen harten Materialien. Die Kombination der Bestandteile der Zusammensetzung verleiht dem behandelten Substrat überlegene mechanische Eigenschaften, namentlich erhöhte Härte und verminderte Sprödheit.

Die Erfindung betrifft also eine Zusammensetzung zur Veredelung eines Substrats, insbesondere zur Veredelung von Glas.

Die Zusammensetzung enthält zunächst eine Bindematrix-Basis aus Silazanen und/oder Siloxanen. Die Siloxane sind von der Form R₃-Si[-O-SiR₂]ₙ-O-SiR₃. Die Silazane sind von der Form R₃-Si[-NH-SiR₂]ₙ-NH-SiR₃. Dabei sind alle R unabhängig voneinander entweder Wasserstoffatome oder organische Substitutenten. Im Falle von organischen Substitutenten sind R unabhängig voneinander Alkyl,-Alkenyl-, Alkinyl-, Cycloalkyl-, Cycloalkenyl-, Cycloalkinyl-, Hydroxialkyl-, Hydroxialkenyl-, Hydroxyalkinyl-, Alkoxy-, Alkenoxy-, Alkinoxy-, Aryl-, Alkylsilyl-Gruppe oder einer der vorgenannten organischen Substituenten, zusätzlich enthaltend mindestens eine Keto-Gruppe, eine Amin-Gruppe oder eine Hydroxyamin-Gruppe. Dabei ist n weiter eine natürliche Zahl grösser als 0.

Bevorzugt sind die Silazane und/oder Siloxane von cyclischer Struktur.

Dabei sind R unabhängig voneinander entweder Wasserstoffatome oder organische Substitutenten. Im Falle von organischen Substitutenten sind R unabhängig voneinander Alkyl,- Alkenyl-, Alkinyl-, Cycloalkyl-, Cycloalkenyl-, Cycloalkinyl-, Hydroxialkyl-, Hydroxialkenyl-, Hydroxyalkinyl-, Alkoxy-, Alkenoxy-, Alkinoxy-, Aryl-, Alkylsilyl -Gruppen oder einer der vorgenannten organischen Substituenten, zusätzlich enthaltend mindestens eine Keto-Gruppe, eine Amin-Gruppe, oder eine Hydroxyamin-Gruppe. n sind unabhängig voneinander natürliche Zahlen grösser als 0.

Die cyclische Struktur erweist sich im Rahmen der Erfindung als besonders geeignet, die Sprödigkeit der mit der Zusammensetzung veredelten Oberfläche zu reduzieren und damit zur Bruchbeständigkeit beizutragen.

Besonders bevorzugt ist eine Matrix, die auf einem Polysilazan basiert, welches von Merck unter dem Handelsnamen Durazane vertrieben wird (CAS-Nr. 919-30-2).

Die Zusammensetzung enthält weiter ein Vernetzungsmittel, etwa ein, Alkoxy-Silan, Alkylamin-Silan oder Isocyanat-Silan. Bevorzugt ist das Vernetzungsmittel ausgewählt aus der Gruppe Tetra-Alkoxy-Silan, Trialkoxy-Silan, Tetra-Alkylamin-Silane, TriAlkylamin-Silan oder Mischungen davon. Das Vernetzungsmittel ist ganz besonders bevorzugt von der Form R-Si-(OR)₃ oder von der Form R-Si-(NR)₃ oder Mischungen davon. Dabei sind alle R unabhängig voneinander entweder Wasserstoffatome oder organische Substitutenten. Im Falle von organischen Substitutenten sind die R Alkyl,- Alkenyl-, Alkinyl-, cycloalkyl-, cycloalkenyl-, cycloalkinyl-, hydroxialkyl-, hydroxialkenyl-, hydroxyalkinyl-, alkoxy-, alkenoxy-, alkinoxy-, aryl-, alkylsilyl-Gruppen oder einer der vorgenannten organischen Substituenten, zusätzlich enthaltend mindestens eine Keto-Gruppe, eine Amin-Gruppe oder eine Hydroxyamin-Gruppe.

Besonders bevorzugt als Vernetzungsmittel ist Triethoxysilyl-3-propylamin (CAS-Nr. 919-30-2).

Schliesslich enthält die Zusammensetzung Hartpartikel, welche eine Vickers-Härte von mehr als 1200 HV1 aufweisen. Die Härte der Partikel wird mit einer Messlast von 1 Newton bestimmt. Die Messung erfolgt gemäss ISO 6507-1:2005. Bei der Herstellung der Zusammensetzung werden die Hartpartikel vorzugweise in Form einer Suspension bereitgestellt und mit den weitern Komponenten der Zusammensetzung gemischt.

Die Zusammensetzung kann noch weitere Bestandteile enthalten.

Die Zusammensetzung wird unter Umgebungsbedingungen auf die zu behandelnde Oberfläche gegeben. Die Feuchtigkeit in der Atmosphäre kann die Alkoxygruppen und/oder Aminogruppen des Vernetzungsmittels und/oder der Siloxane / Silazane hydrolisieren. Die Reaktion wird durch die Gegenwart von Säure begünstigt. Alkohole und/oder Amine werden freigesetzt.

Die an den Siloxanen / Silazanen und am Vernetzungsmittel resultierenden Hydroxysilyl-Gruppen können anschliessend mit Hydroxy-Gruppen / Aminogruppen anderer Siloxane / Silazano oder Hydroxylgruppen des Vernetzungsmittel bei Raumtemperatur zu einer Netz-Struktur kondensieren. Es wird Wasser und / oder Ammoniak freigesetzt.

Die an den Siloxanen / Silazanen und am Vernetzungsmittel resultierenden Hydroxysilyl-Gruppen können ausserdem bei Raumtemperatur mit den Hydroxy-Gruppen der Substratoberfläche und mit Hydroxy-Gruppen an der Oberfläche der Hartpartikel kondensieren. Es wird Wasser freigesetzt.

Die Hydrolyse wie auch die Kondensation laufen bei wenigstens Raumtemperatur ab. Die Matrix ist dabei vorzugsweis nach 48, besonders bevorzugt 24 Stunden im Wesentlichen vollständig ausgehärtet.

Die Bindematrix vernetzt sich in der Gegenwart von Feuchtigkeit und kann sich kovalent mit der Substratoberfläche sowie vorzugsweise auch mit den Hartpartikeloberflächen verbinden.

In einer bevorzugten Ausführungsform sind die Hartpartikel ausgewählt aus den Materialien Diamant, Aluminiumoxid, Siliziumcarbid, Bornitrid oder Borcarbid sowie Mischungen davon.

In einer weiteren vorteilhaften Ausführungsform werden Hartpartikel verschiedener Grössenbereiche in der Zusammensetzung kombiniert. Insbesondere weist ein erster Teil der Hartpartikel einen Median-Durchmesser von weniger als 5µm, bevorzugt von weniger als 1 µm, und besonders bevorzugt von 0.5-1 µm auf. Ein zweiter Teil der Hartpartikel ist kleiner als 1 µm, bevorzugt kleiner als 0.2 µm, und besonders bevorzugt zwischen 0.002 und 0.1 µm. Partikel dieser bevorzugten Grössen lassen sich besonders homogen in die Matrix einbringen, was die Transparenz und gleichmässige mechanische Belastbarkeit der zu veredelnden Oberfläche verbessert.

In einer besonders bevorzugten Ausführungsform werden Hartpartikel verschiedener Grössenbereiche in der Zusammensetzung kombiniert. Insbesondere kann ein Teil der Hartpartikel, vorzugsweise 20-40 Gew.% aller Hartpartikel, besonders bevorzugt ca. 33 Gew.% aller Hartpartikel, aus Hartpartikeln mit einem Durchmesser von 1-350 nm, bevorzugt 150-250 nm, besonders bevorzugt 175-225 nm, bestehen. Ein zweiter Teil der Hartpartikel, vorzugsweise 20-40 Gew.% aller Hartpartikel, besonders bevorzugt ca. 33 Gew.% aller Hartpartikel, kann aus Hartpartikeln mit einem Durchmesser von 351-649 nm, bevorzugt 400-600 nm, besonders bevorzugt 450-550 nm bestehen. Und ein dritter Teil der Hartpartikel, vorzugsweise 20-40 Gew.% aller Hartpartikel, besonders bevorzugt ca. 33 Gew.% aller Hartpartikel, kann aus Hartpartikel mit einem Durchmesser von 650-850 nm, bevorzugt 700-800 nm, besonders bevorzugt 725-775 nm, bestehen.

Es hat sich herausgestellt, dass die Partikel aus den unterschiedlichen Grössenbereicheen unterschiedlich tief in das zu veredelnde Substrat eindringen. Konkret dringen die kleinsten Hartpartikel am weitesten in das zu veredelnde Substrat ein, wo sie sich in einer innersten Schicht, bevorzug in etwa 30-50µm Tiefe, mit der Matrix kovalent verbinden. Die Partikel des mittleren Grössenbereiches dringen weniger weit in das zu veredelnde Substrat ein. Sie bilden eine zweite, an die innerste Schicht anschliessende Schicht und verbinden sich dort mit der Matrix. Die Partikel des höchsten Grössenbereichs bilden die äusserste Schicht an der Oberfläche des zu veredelnden Substrats. Der sich so ausbildende Gradient in der Grösse der eingelassenen Partikel unterstützt die Stabilität und die Zähigkeit des veredelten Glases, indem pro Schicht jeweils ein an die mechanische Belastung angepasstes Verhältnis von Zähigkeit und Härte vorliegt.

Um eine möglichst gleichmässige Verteilung der Masse der Hartpartikel über alle Schichten hinweg zu gewährleisten, stammen die Hartpartikel idealerweise zu gleichen Teilen aus den drei vorgenannten Grössenbereichen. Es hat sich als vorteilhaft erwiesen, Anteile von 20-40 Gew.-% je Grössenbereich an der Gesamtpartikelmasse zu wählen. Besonders vorteilhaft sind Anteile von 25-35 Gew.-% je Grössenbereich an der Gesamthartpartikelmasse.

Die Zusammensetzung kann weiter ein Lösungsmittel enthalten. Beispiele geeigneter Lösungsmittel sind Ethylacetat, Butylacetat, Hexan, höhere Alkane, Tetrahydrofuran, sowie Mischungen davon. Höhere Alkane sind aliphatische Kohlenwasserstoffe mit der Summenformel CₙH₂ₙ₊₂, wobei n grösser 5 ist. Geeignete Lösungsmittel können die vollständige Benetzung der Oberfläche verbessern und die Dispersion der Hartpartikel im Fluid und in der ausgehärteten Matrix begünstigen.

Die Massenanteile der verschiedenen, nicht abschliessend genannten Komponenten an der Gesamtzusammensetzung betragen in einer bevorzugten Ausführungsform:
- 25-95 Gew.-% Siloxane und/oder Silazane, bevorzugt 70-95 Gew.-%;
- 1-10 Gew.-% Vernetzungsmittel, bevorzugt 5-10 Gew.-%;
- 0.1-10 Gew.-% Hartpartikel, bevorzugt 0.5-2.5 Gew.-%, besonders bevorzugt 1-5 Gew.-%, welche Hartpartikel einen Median-Durchmesser von weniger als 5µm, bevorzugt von weniger als 1 µm, und besonders bevorzugt von 0.5-1 µm aufweisen;
- 0.1-10 Gew.-% Hartpartikel, bevorzugt 0.5-2.5 Gew.-%, besonders bevorzugt 1-5 Gew.-%, welche Hartpartikel einen Median-Durchmesser von weniger als 1 µm, bevorzugt von weniger als 0.2 µm, und besonders bevorzugt zwischen 0.002 und 0.1 µm aufweisen;
- 0-20 Gew.-% Lösungsmittel, bevorzugt 0.1 bis 15 Gew.-%, besonders bevorzugt 0.5-10 Gew.-%.

Diese Ausführungsform optimiert die rasche und stabile Vernetzung der Siloxane und/oder Silazane mit dem Vernetzungsmittel und das ausgewogene Verhältnis von Härte und Zähigkeit des resultierenden Oberflächenmaterials.

Ein weiterer Aspekt der Erfindung betrifft das Substrat, veredelt mit der erfindungsgemässen Zusammensetzung. Insbesondere weist ein das Substrat nach der Behandlung mir der erfindungsgemässen Zusammensetzung eine Oberflächenhärte ≥ 9 auf der Mohs Skala auf. Die Oberflächenhärte kann auch mit dem Taber Abraser Test, einem geläufigen Test für die Abriebbeständigkeit organischer Beschichtungen, bestimmt werden. Zusätzlich kann die Oberflächenhärte durch eine Universalhärte-Prüfung mittels Nanoindentierung bestimmt werden.

Ein weiterer Aspekt der Erfindung betrifft ein Verfahren zur Veredelung eines Substrats mit der Zusammensetzung wie vorstehend beschrieben. Dabei wird die Zusammensetzung auf die Oberfläche des Substrats aufgetragen, wo sie auf das Substrat einwirkt. Bevorzugt wird das Substrat gleichmässig auf die Oberfläche aufgetragen. Der Auftrag kann mit Hilfe eines Spachtels erfolgen. Bevorzugt wird die Zusammensetzung im Überschuss, besonders bevorzugt mit einer Schichtdicke von mehr als 100 µm, auf das Substrat aufgetragen.

Die Einwirkzeit beträgt bevorzugt wenigstens 6 Minuten, besonders bevorzugt wenigstens 10 Minuten und ganz besonders bevorzugt wenigstens 15 Minuten.
Eine längere Einwirkzeit bewirkt ein tieferes Eindringen der Zusammensetzung ins Substrat.
Nach Ablauf der Einwirkzeit wird der noch flüssige Teil der aufgetragenen Zusammensetzung entfernt, insbesondere auspoliert. Die Oberfläche kann mit einem Tuch, bevorzugt mit einem Mikrofasertuch auspoliert werden. Anschliessend härtet die Zusammensetzung bei Raumtemperatur aus. Die Aushärtung kann nach 7 Tagen, vorzugsweise 48 Stunden, besonders bevorzugt 24 Stunden als abgeschlossen gelten.

In einer bevorzugten Ausführungsform wird die Oberfläche des Substrats vor dem Auftrag der Zusammensetzung mit einem Ätzmittel behandelt. Das Ätzmittel ist bevorzugt eine organische oder mineralische Säure in wässriger Lösung, besonders bevorzugt Citronensäure. Durch das Ätzmittel werden Hydroxy-Gruppen auf der Substratoberfläche gebildet, welche anschliessend mit der Siloxan- / Silazan-Matrix kovalente Bindungen eingehen können.

Ein weiterer Aspekt der Erfindung betrifft ein Kit zur Veredelung eines Substrats, enthaltend eine Zusammensetzung wie vorstehend beschrieben, und eine Gebrauchsinstruktion, welche insbesondere die Schritte des vorstehend beschriebenen Verfahrens erläutert. Das Kit ermöglicht es einem Laien, ein Substrat seiner Wahl selbständig zu veredeln und insbesondere dessen Oberfläche zu härten.

Das Kit kann, in einer bevorzugten Ausführungsform, weiter wenigstens einen Spachtel zum Auftragen der Zusammensetzung und/oder wenigstens ein Poliertuch enthalten. In einer weiteren bevorzugten Ausführungsform kann das Kit wenigstens ein Ätzmittel, bevorzugt ein in Ätzmittel getränktes Tuch im luftdichten Sachet enthalten, sowie eine Gebrauchsanleitung, welche das erfindungsgemässe Verfahren, einschliesslich die Anätzung des Substrats, beschreibt. Bevorzugt wird zwischen dem Auftrag des Ätzmittels und dem Auftrag des Substrats eine Einwirkzeit von wenigstens 3 Minuten, besonders bevorzugt von wenigstens 6 Minuten, abgewartet.

Die erfindungsgemässe Zusammensetzung kann beispielsweise zur Veredelung von Mobiltelefondisplays, von Displays anderer Mobilgeräte, von Displays anderer elektronischer Geräten, zur Veredlung von Windschutzscheiben von Fahrzeugen, Lackbeschichtungen von Fahrzeugen, Schiffsteilen, anderen Fahrzeugteilen, Uhrengehäusen, Uhren-Werkteilen, mechanischen Verschleissteilen, Verschleissteilen bestehend aus transparenten Werkstoffen wie Glas, Quartz, Keramik, Zirkon, Kunststoffen, Flachglas, technischen Linsen und Gläsern, Produkten und Bestandteilen der Medizinaltechnik verwendet werden. Die erwähnten Verwendungen sind jedoch nur beispielhaft und keineswegs abschliessend.

Die Erfindung wird nachfolgend anhand eines Ausführungsbeispiels und einer Figur näher erläutert, ohne dass die Erfindung hierauf zu beschränken wäre.

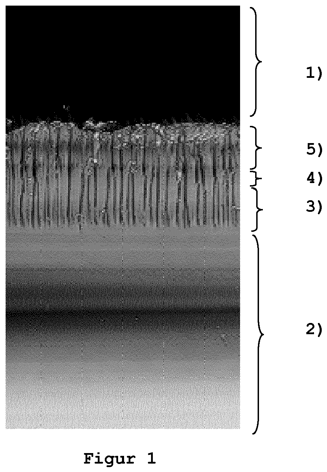

- Fig. 1:: Elektronenmikroskopie-Aufnahme einer veredelte Glas-oberfläche im Querschnitt

In einer vorteilhaften Ausführungsform der Erfindung wurde die Zusammensetzung wie folgt in einem Becherglas hergestellt:
- 82.5 Gew.-%: cyclisches Polysilazane, kommerziell erhältlich bei Merck unter dem Handelsnamen Durazane (CAS-Nr. 919-30-2);
- 7.5 Gew.-%: Triethoxysilyl-3-propylamin, kommerziell erhält-lich bei Merck (CAS-Nr. 919-30-2);
- 10 Gew.-%: Diamant-Suspension, wobei diese 20 Gew.-% Diaman-tanteil enthält und wobei der Gesamt-Diamantanteil sich zu gleichen Teilen zusammensetzt aus Diamant-partikel des Grössenbereichs mit Median-Durchmesser von 200 nm, aus Diamantpartikel des Grössenbereichs mit Median-Durchmesser von 500 nm, und aus Diamantpartikel des Grössenbereichs mit Median-Durchmesser von 750 nm.

Die vorstehend genannte Diamant-Suspension, kann alternativ auch zwischen 1 bis 20 Gew.-% Diamantanteil, bevorzugt 5 bis 10 Gew.-% Diamant, besonders bevorzugt 10 Gew.-% enthalten, und wobei sich der Gesamt-Diamantanteil zu gleichen Teilen zusammensetzt aus Diamantpartikel des Grössenbereichs mit Median-Durchmesser von 200 nm, aus Diamantpartikel des Grössenbereichs mit Median-Durchmesser von 500 nm, und aus Diamantpartikel des Grössenbereichs mit Median-Durchmesser von 750 nm.

Die Glasbeschichtung eines Mobiltelefon-Displays wurde mit Citronensäure eingerieben und die Säure wirkte während 6 Minuten auf die Oberfläche ein. Die Zusammensetzung wurde gründlich gemischt und mit Hilfe eines Spatels im Überschuss auf die Oberfläche aufgetragen. Die Zusammensetzung wirkte während 15 Minuten auf die Oberfläche ein. Die Oberfläche wurde mit Hilfe eines Mikrofasertuchs auspoliert. Die mit der Zusammensetzung veredelte Oberfläche härtete währen 48 Stunden bei Raumtemperatur aus.

Ein Querschnitt durch das veredelte Glas ist in Figur 1 gezeigt. Bezugszeichen 1 kennzeichnet den Hintergrund. Bezugszeichen 2 kennzeichnet den nicht durchdrungenen Teil des Glases.

Nach 15 Minuten Einwirkzeit ist die Zusammensetzung rund 33 µm in das Glas eingedrungen. In der untersten Schicht sind die feinsten Nano-Partikel lokalisiert (3). In einer darüber liegenden Schicht sind weitere Nano-Diamant-Partikel lokalisiert (4). In der obersten Schicht sind Diamant-Partikel groberer Körnung erkennbar (5). Die Silazan-basierte Matrix ist über alle Schichten (3), (4), (5) des Eindringbereichs diffundiert.

Die Beschichtung hat eine Härte von > 9 auf der Mohs Skala.

## Patentansprüche

1. Zusammensetzung zur Veredelung eines Substrats, insbesondere Glas, enthaltend eine Bindematrix umfassend
- Silazane und/oder Siloxane, bevorzugt Cyclo-Silazane und/oder Cyclo-Siloxane; und
- ein Vernetzungsmittel, wobei das Vernetzungsmittel bevorzugt ein Alkoxy-Silan von der Form R-Si-(OR)₃ oder ein Alkylamin-Silan von der Form R-Si-(NR)₃ ist,
wobei die Zusammensetzung weiter Hartpartikel enthält, welche eine Vickers-Härte von mehr als 1200 HV1 aufweisen.

2. Zusammensetzung gemäss Anspruch 1, wobei die Hartpartikel ausgewählt sind aus der Gruppe bestehend aus Diamant, Aluminiumoxid, Siliziumcarbid, Bornitrid, Borcarbid, sowie Mischungen davon.

3. Zusammensetzung gemäss einem der Ansprüche 1 bis 2, wobei ein erster Teil der Hartpartikel einen Median-Durchmesser von weniger als 5µm, bevorzugt von weniger als 1 µm, und besonders bevorzugt von 0.5-1 µm aufweist; und wobei ein zweiter Teil der Hartpartikel einen Median-Durchmesser von weniger als 1 µm, bevorzugt weniger als 0.2 µm, und besonders bevorzugt zwischen 0.002 und 0.1 µm aufweist.

4. Zusammensetzung gemäss einem der Ansprüche 1 bis 3, wobei die Hartpartikel ausgewählt sind aus:
- Hartpartikeln mit einem Durchmesser im Grössenbereich von 1-350 nm, bevorzugt 150-250 nm, besonders bevorzugt 175-225 nm;
- Hartpartikel mit einem Durchmesser im Grössenbereich von 351-649 nm, bevorzugt 400-600 nm, besonders bevorzugt 450-550 nm;
- Hartpartikel mit einem Durchmesser im Grössenbereich von 650-850 nm, bevorzugt 700-800 nm, besonders bevorzugt 725-775 nm.

5. Zusammensetzung gemäss Anspruch 4, wobei der Hartpartikelanteil bevorzugt folgende Zusammensetzung aufweist:
- 20-40 Gew.-%, bevorzugt 25-35 Gew.-%, besonders bevorzugt 33 Gew.-% Hartpartikel mit einem Durchmesser im Grössenbereich von 1-350 nm, bevorzugt 150-250 nm, besonders bevorzugt 175-225 nm;
- 20-40 Gew.-%, bevorzugt 25-35 Gew.-%, besonders bevorzugt 33 Gew.-% Hartpartikel mit einem Durchmesser im Grössenbereich von 351-649 nm, bevorzugt 400-600 nm, besonders bevorzugt 450-550 nm;
- 20-40 Gew.-%, bevorzugt 25-35 Gew.-%, besonders bevorzugt 33 Gew.-% Hartpartikel mit einem Durchmesser im Grössenbereich von 650-850 nm, bevorzugt 700-800 nm, besonders bevorzugt 725-775 nm.

6. Zusammensetzung gemäss einem der Ansprüche 1 bis 5, wobei die Zusammensetzung zusätzlich ein Lösungsmittel enthält, bevorzugt ausgewählt aus der Gruppe bestehend aus Ethylacetat, Butylacetat, Hexan, höhere Alkane, Tetrahydrofuran, sowie Mischungen davon.

7. Zusammensetzung gemäss einem der Ansprüche 1 bis 6, wobei die Zusammensetzung folgende Massenanteile aufweist:
- 25-95 Gew.-% Siloxane und/oder Silazane, bevorzugt 70-95 Gew.-%;
- 1-10 Gew.-% Vernetzungsmittel, bevorzugt 5-10 Gew.-%;
- 0.1-10 Gew.-% Hartpartikel, bevorzugt 0.5-2.5 Gew.-%, besonders bevorzugt 1-5 Gew.-%, welche Hartpartikel einen Median-Durchmesser von weniger als 5µm, bevorzugt von weniger als 1 µm, und besonders bevorzugt von 0.5-1 µm aufweisen;
- 0.1-10 Gew.% Hartpartikel, bevorzugt 0.5-2.5 Gew.-%, besonders bevorzugt 1-5 Gew.-%, welche Hartpartikel einen Median-Durchmesser von weniger als 1 µm, bevorzugt weniger als 0.2 µm, und besonders bevorzugt zwischen 0.002 und 0.1 µm aufweisen;
- 0-20 Gew.-% Lösungsmittel, bevorzugt 0.1-15 Gew.-%, besonders bevorzugt 0.5-10 Gew.-%.

8. Substrat, veredelt mit einer Zusammensetzung gemäss einem der Ansprüche 1 bis 7.

9. Substrat gemäss Anspruch 8, wobei die veredelte Oberfläche eine Härte von ≥ 9 auf der Mohs-Skala aufweist.

10. Verfahren zur Veredelung eines Substrats mit einer Zusammensetzung gemäss einem der Ansprüche 1 bis 7, umfassend die Schritte:
- Auftragen einer Zusammensetzung gemäss einem der Ansprüche 1 bis 7 auf das Substrat;
- Einwirken lassen;
- Entfernen des überschüssigen Teils der aufgetragenen Zusammensetzung, insbesondere Auspolieren;
- Aushärten lassen der Zusammensetzung.

11. Verfahren gemäss Anspruch 10, wobei die Oberfläche vor dem Auftrag der Zusammensetzung mit einem Ätzmittel behandelt wird, bevorzugt mit einer organischen oder mineralischen Säure in wässriger Lösung, besonders bevorzugt mit Citronensäure.

12. Kit zur Veredelung eines Substrats, enthaltend
- wenigstens eine Zusammensetzung gemäss einem der Ansprüche 1 bis 7;
- eine Gebrauchsanleitung zur Veredelung eines Substrats mit der Zusammensetzung, insbesondere für das Verfahren nach einem der Ansprüche 10 oder 11.

13. Kit gemäss Anspruch 12, weiter enthaltend
- wenigstens einen Spachtel zum Auftragen der Zusammensetzung; und/oder
- wenigstens ein Poliertuch.

14. Kit gemäss einem der Ansprüche 12 oder 13, weiter enthaltend
- wenigstens ein Ätzmittel, bevorzugt eine organische oder mineralische Säure in wässriger Lösung, besonders bevorzugt Citronensäure; wobei das Ätzmittel bevorzugt mittels eines getränkten Tuchs im luftdichten Sachet bereitgestellt ist;
- eine Gebrauchsanleitung für das Verfahren nach Anspruch 11.

15. Verwendung einer Zusammensetzung gemäss einem der Ansprüche 1-7 für die Veredelung eines Substrats ausgewählt aus der Gruppe bestehend aus Displays von Mobiltelefonen, Displays von anderen Mobilgeräten, Displays von anderen elektronischen Geräten, Windschutzscheiben von Fahrzeugen, Lackbeschichtungen von Fahrzeugen, Schiffsteilen, anderen Fahrzeugteilen, Uhrengehäusen, Uhren-Werkteilen, Verschleissteilen, Verschleissteilen bestehend aus transparenten Werkstoffen wie Glas, Quartz, Keramik, Zirkon, Kunststoffen, anderen Werkteilen, Flachglas, technischen Linsen und Gläsern, Produkten und Bestandteilen der Medizinaltechnik.
